# EUROPEAN PATENT SPECIFICATION

(11) **EP 1 548 315 B1**
(45) Date of publication and mention of the grant of the patent: **14.04.2010**
(21) Application number: 04106836.2
(22) Date of filing: 22.12.2004
(51) Int. Cl.: F16D 57/04, B60K 17/28

(54) **Use of an auxiliary braking device for a vehicle**
Verwendung einer Hilfsbremsvorrichtung für Fahrzeuge
Utilisation d'un frein auxiliaire pour véhicules

(30) Priority: 29.12.2003 IT MI20032605
(43) Date of publication of application: 29.06.2005
(73) Proprietor: IVECO S.p.A., 10156 Torino (IT)
(72) Inventor: Dellora, Giancarlo, 10129 Torino (IT)
(74) Representative: Gervasi, Gemma

(56) References cited:
- DE-A- 1 655 928
- US-A- 2 748 570
- US-A- 3 572 480
- US-A- 3 939 949
- US-A- 4 324 387
- US-A- 4 405 038
- SCHWAB M ET AL: "EIN INTEGRIERTER HYDRODYNAMISCHER RETARDER FUER DIE NEUE ECOSPLIT- GETRIEBEREIHE" ATZ AUTOMOBILTECHNISCHE ZEITSCHRIFT, FRANCKH'SCHE VERLAGSHANDLUNG. STUTTGART, DE, vol. 95, no. 5, 1 May 1993 (1993-05-01), XP000362811 ISSN: 0001-2785

## Description

This invention relates to the use of an auxiliary braking device for a vehicle.

Certain vehicles, such as those characterized by a high total weight, either in terms of their unladen weight or the weight of the load, and thus by high inertia, may be required to operate in severe conditions, for example on particularly steep gradients. This makes high braking power essential.

However, this requirement may only arise under certain conditions, or at certain times. High braking power may not always be needed. It may only be required from time to time, or it may only become necessary after selling the vehicle. In such cases it must be possible to supplement the vehicle's existing braking power, by installing the relative device at the customer's request at the time of purchase, or even by retrofitting it at a later date. However, this must be possible without having any significant effect on the costs involved in designing and/or manufacturing the vehicle. It must be possible to install the device at a reasonable cost and without having to make any significant modifications to the vehicle.

A device known as a "retarder" is already known in the art. Such device, which consists of a hydraulic braking system that increases the braking power, could be used for the purpose described above. However, the problem with such device is its location, since it involves the installation of a new rotating shaft for the hydraulic brake driven by the engine, in positions where it is usually extremely difficult to create the appropriate space. The costs involved are high, both in terms of modifications to the design and to the production of the engine, making it very difficult to retrofit such a device once the vehicle has been manufactured and sold.

It is known in the art examples of an hydraulic brake implemented by a retarder which is applied in a fixed way either to the drive shaft of the motor, or gear-change, or to a derived gear, which could also be a power take-off, which however is no longer available as power take-off after applying the retarder, see e.g. US 3 572 480.

The purpose of this invention is to overcome these drawbacks with a method for equipping a vehicle with additional braking power at the customer's request, to be included as an option at the time of sale or retrofitted at a later date, without requiring any significant modifications to the design or production of the engine, at a reasonable price. More precisely this invention refers to an auxiliary braking device for a vehicle that consists of a hydraulic brake that is fitted to a power take-off shaft of an engine.

This invention refers in particular to an auxiliary braking device for a vehicle, as described in the claim.

The purposes and advantages of this invention will become clear from the following detailed description of a preferred embodiment and the drawings that are attached hereto, which are merely illustrative and not limitative, of which:
figure 1 is a cross-sectional side view of an engine illustrating a complete set of gears;
figure 2 is a schematic illustration of the cross-section in fig. 1 for the purpose of facilitating understanding of the description;
figure 3 is a construction drawing of a hydraulic brake;
figure 4 is a diagram of a preferred embodiment of the device according to this invention.

In the drawings the same reference numbers and letters are used to identify the same elements.

Certain engines incorporate a housing for a device known as the "power take-off" that consists of a casing that is mounted on the engine, containing a rotating shaft that is driven by the driving shaft and transfers the power take-off point outside the engine, in order to control loads, such as pumps or winches, etc.

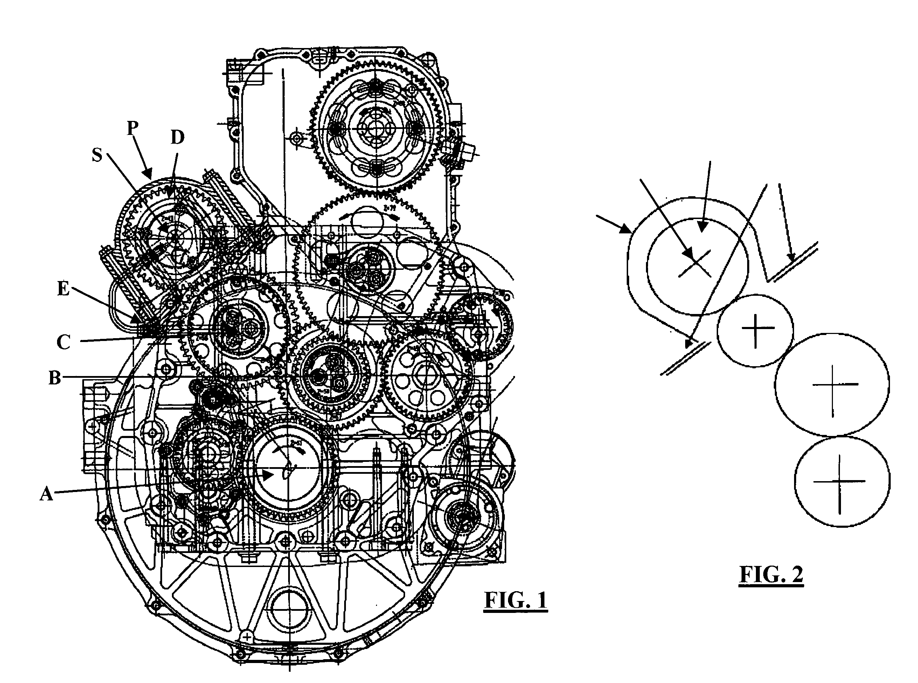

Figures 1 and 2 illustrate the drive shaft gear A, with a first intermediate gear B, an additional intermediate gear C and the gear D of a power take-off P which has its own shaft S leading out of the engine. Torque is transmitted by the gear A to the gear D via the intermediate gears B and C.

The letter E indicates the points where the casing of the take-off power P is attached to the engine. Such casing may also be retrofitted. In that case, the engine will originally have a cover over such points and such cover can be removed and the power take-off inserted when necessary.

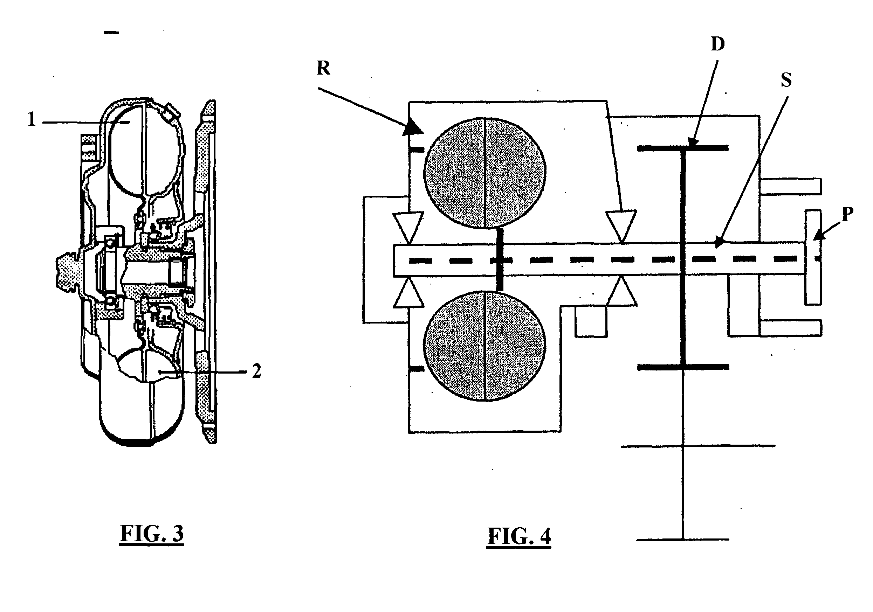

Fig. 3 is a construction drawing of a conventional retarder hydraulic brake R, which consists of a braking system that produces a hydraulic coupling effect and dissipates the energy in a fluid, usually water or oil.

The retarder R basically comprises two rotors that are placed side by side, labelled 1 and 2 in the figure: one spins and the other is stationary; inside there is a fluid that produces a hydraulic drag which dissipates the heat and absorbs the torque in proportion to the amount of fluid and the difference in the speed of the two rotors, in this case according to the speed of the spinning rotor.

With reference to the diagram in fig. 4, according to this invention, the retarder R is mounted on the shaft S of the power take-off P (incorporating the gear D). Either one of the rotors of the retarder R is integral with the shaft S, while the other is stationary. The rotor set in motion by the shaft S acts as a pump and as it spins it pumps the fluid over the other stationary rotor, which is equipped with splash plates against which the fluid splashes, dissipating the energy, thus acting as a hydraulic brake and tending to slow down the rotation of the shaft S.

According to the invention, the power take-off P is maintained, as there are two ends to the shaft S: the power take-off P is still present at one end, while the retarder R is fitted to the other end.

The assembly can thus be mounted on the engine as an optional device with a power take-off at one end and a small but powerful retarder at the other.

The retarder increases the braking torque by approximately half the normal braking torque of the vehicle/engine, and is thus extremely useful for certain vehicle applications.

In addition, by installing the retarder on the power take-off, the ratio between its power and the r.p.m. of the engine is fixed, with the advantage that its power characteristic curve superposes with that of the engine, thus increasing the effect of the "engine brake".

The retarder dissipates the torque in the fluid circuit, of a type that is known in the art and not illustrated in the figures. It does not interact with the vehicle's service brakes but enables these to be used less, thus reducing wear. The retarder may, for instance, be operated by means of the brake pedal of the vehicle in a manner known in the art, which is not described here.

In a possible embodiment the fluid is the water of the engine cooling circuit. Through a pipeline embodied in a known way, the water of the engine cooling circuit can be supplied also to the retarder. The flow rate of the water in the retarder can be controlled by a valve which therefore controls the power of the retarder. The circulation of water in the retarder pipeline can be forced by the same pump of the engine cooling circuit. The water of the retarder circuit can be cooled by the engine cooling circuit itself. This way the installation of the retarder circuit is further simplified on an existing vehicle, thus reducing the installation costs, as it is not necessary to install a suitable complete circuit for the fluid circulation in the retarder and for its cooling.

It will be apparent to the person skilled in the art that other alternative and equivalent embodiments of the invention can be conceived and reduced to practice without departing from the invention as defined in the claim.

The advantages in connection with the use of the present invention are clear.

From the description set forth above it will be possible for the person skilled in the art to embody the invention without introducing any further construction details.

## Claims

1. Use of a retarder-type hydraulic brake (R) as an auxiliary braking device in a vehicle, said vehicle having a shaft (S) of a power take-off of an engine of the vehicle freely available for power supply to external devices to be connected to said shaft, said shaft having two ends and being driven by a drive shaft (A) of the engine of the vehicle, said retarder-type hydraulic brake (R) being connected to one end of said shaft (S) of the power take-off, the other end of the shaft remaining available for power supply to external devices to be connected to it.

## Patentansprüche

1. Verwendung einer Hydraulik-Bremse (R) des Verzögerungs-Typs als Hilfsbremsen-Vorrichtung in einem Fahrzeug, wobei das Fahrzeug eine Welle (S) eines Kraftabtriebs eines Motors eines Fahrzeugs aufweist, der frei verfügbar für die Leistungsversorgung zu externen Vorrichtungen ist, die mit der Welle verbunden werden sollen, wobei die Welle zwei Enden aufweist und durch eine Antriebswelle (A) des Motors des Fahrzeugs angetrieben wird, wobei die hydraulische Bremse (R) des Verzögerungs-Typs mit einem Ende der Welle (S) des Kraftabtriebs verbunden ist und das andere Ende der Welle verfügbar bleibt zur Leistungsversorgung zu externen Vorrichtungen, die mit ihm verbunden werden sollen.

## Revendications

1. Utilisation d'un frein hydraulique (R) de type ralentisseur en tant que dispositif de freinage auxiliaire dans un véhicule, ledit véhicule ayant un arbre (S) d'une prise de force d'un moteur de véhicule librement disponible pour alimenter la puissance aux dispositifs externes à raccorder audit arbre, ledit arbre ayant deux extrémités et étant entraîné par un arbre d'entraînement (A) du moteur du véhicule, ledit frein hydraulique (R) de type ralentisseur étant raccordé à une extrémité dudit arbre (S) de la prise de force, et l'autre extrémité de l'arbre restant disponible pour alimenter la puissance aux dispositifs externes destinés à être raccordés à celui-ci.
